# EUROPÄISCHE PATENTSCHRIFT

(11) **EP 1 170 113 B1**
(45) Veröffentlichungstag und Bekanntmachung des Hinweises auf die Patenterteilung: **29.09.2004**
(21) Anmeldenummer: 01116100.7
(22) Anmeldetag: 03.07.2001
(51) Int. Cl.: B29C 49/78, B29C 47/92

(54) **Verfahren zum Herstellen von Kunststoff-Blasformartikeln**
Method of forming blow-moulded plastic articles
Procédé pour la fabrication de pièces en plastique moulées par soufflage

(30) Priorität: 07.07.2000 DE 10032610
(43) Veröffentlichungstag der Anmeldung: 09.01.2002
(73) Patentinhaber: SIG Kautex GmbH & Co. KG, 53229 Bonn (DE)
(72) Erfinder: Lullwitz , Uwe, 50827 Köln (DE); Wehrens, Dirk, 53757 St Augustin (DE); Schlutermann, Antonius, 53797 Lohmar (DE)
(74) Vertreter: Valentin, Ekkehard, Dipl.-Ing.

(56) Entgegenhaltungen:
- DE-A- 3 619 113
- US-A- 5 470 218
- FUHRMANN G ET AL: "BILDVERARBEITUNGSSYSTEME - EINSATZ IN DER KUNSTSTOFFINDUSTRIE" KUNSTSTOFFBERATER, KUNSTSTOFF VERLAG. ISERNHAGEN, DE, Bd. 41, Nr. 7/8, 1. Juli 1996 (1996-07-01), Seiten 8-10, XP000598255 ISSN: 0172-6374

## Beschreibung

Die Erfindung betrifft ein Verfahren zum Herstellen von Kunststoff-Blasformartikeln auf einer Blasformmaschine, die zur Erzeugung mindestens eines Vorformlings mit über seine Länge veränderlicher Wanddicke einen Düsenkopf mit von einer Rechnereinheit nach Vergleichswerten prozeßgesteuerten Düsenspalteinstellung aufweist.

Ein Kunststoff-Blasformverfahren dieser Art ist durch die DE 36 19 113 A1 bekanntgeworden. Die dort beschriebene, herkömmliche Kunststoff-Blasformmaschine besitzt einen Doppelkegelkopf zur Formung eines zylindrischen, aus einer Düse extrudierten Kunststoffkörpers. Im Kopf ist ein mit Hilfe eines Stellzylinders vertikal bewegbarer Dorn angeordnet, mit dem sich der Düsenspalt bestimmen läßt, der zwischen dem unteren Ende des Dorns und dem inneren, unteren Ende des Doppelkegelkopfes durch eine Vertikalbewegung des Dorns eingestellt oder justiert werden kann. Ein der Ermittlung des Spritzhubes eines Spritzkolbens dienender Fühler ist an eine Einstellvorrichtung angeschlossen, die eine Einrichtung zum Einstellen des Dickenprofils des Düsenschlitzes umfaßt. Mit der Einstellvorrichtung sind weiterhin ein dem Stellzylinder zugeordnetes Stellventil und eine Markierer verbunden, mit dessen Hilfe im bestimmten Abstand in der Längsrichtung des extrudierten Vorformlings Markierungen aufgetragen werden. An die Einstellvorrichtung angeschlossen ist weiterhin ein die Querschnitts- oder Wanddicke eines geformten Gegenstandes, d.h. Fertigartikels ermittelndes Dikkenmeßgerät.

Das Festlegen der Wanddickensteuerungskurve zu der davon abhängigen, prozeßgesteuerten Düsenspalteinstellung geschieht somit durch Anbringen von Markierungen mit vorbestimmten Abständen in Längsrichtung des Vorformlings und Abgleichen mit dem gemessenen Querschnitt oder der gemessenen Wanddicke mit einer vorher in ein Steuergerät eingegebenen vorbestimmten Dicke.

Im Ansprechen auf die Steuersignale von dem Steuergerät wird die Düsenspalteinstellung vorgenommen. Hierbei werden abhängig von der ermittelten Länge des Vorformlings ein Längensignal, ein Kolbenpositionssignal vom Fühler und das Querschnitts- oder Wanddickensignal der Dickenmeßeinrichtung dem Steuergerät zugeführt, so daß die Konstantwanddicke und die Werte der Dickenquerschnitte als eine Funktion der Länge des Vorformlings sichtbar dargestellt werden.

Aus der DE-Zeitschrift "Kunststoffe 74 (1984) 1, Seiten 9 bis 11" ist eine Wanddikkenoptimierung beim Blasformen durch Mikrorechnereinsatz unter Verwendung des partiellen Wanddicken-Steuerungs-Systems (PWDS) bekannt. Der eingesetzte Mikrorechner besitzt neben der integrierten Wanddicken-Programmierung des Vorformlings in Längs- und in Umfangsrichtung außerdem die Regelung der Temperaturen des Schneckenzylinders und der Massetemperatur in Form einer Kaskadenregelung sowie die Regelung der Bewegungen für den Blasdorn, den Transport und das Schließsystem. Durch die Abspeicherung eingegebener Sollwerte auf einen externen Datenspeicher stehen neben den Profilpunkten auch alle anderen Daten, die die Wanddickenverteilung für einen Artikel bestimmen, auf Abruf bei erneutem Produktionsbeginn zur Verfügung. Das durch Setzen von Markierungen erreichte Wanddickenprofil bzw. Profilwerte werden dem Bediener und Einrichter auf dem Anzeige- und Bedienfeld des Mikrorechners angezeigt.

Der Erfindung liegt die Aufgabe zugrunde, ein Verfahren der eingangs genannten Art als Hilfe für den Bediener bzw. Einrichter weiter zu vereinfachen und die Reproduzierbarkeit zu verbessern.

Diese Aufgabe wird erfindungsgemäß dadurch gelöst, daß ein Fertigartikel - z. B. als Foto abgescannt - auf dem Bildschirm der Rechnereinheit neben dem Profil der Wanddickensteuerungskurve dargestellt sowie kritische Stellen des Kurvenprofils markiert und dem Fertigartikel grafisch zugeordnet werden. Hierbei lassen sich vorteilhaft von festgestellten Abweichungen des aktuell produzierten vom dokumentierten Fertigartikel hergeleitete Änderungen des Kurvenprofils in die Steuerung übernehmen. Der Bediener hat somit die Möglichkeit der unverzüglichen Einflußnahme auf die Wanddickengestaltung in Relation zum wirklichen Produkt bzw. Fertigartikel. Er kann sofort eingreifen, wenn die den kritischen Stellen zugeordneten Markierungen nicht mit denen des dokumentierten Fertigartikels übereinstimmen und diese - sowie damit einhergehend die Düsenspalteinstellung - bis zur Optimierung verändern. Durch z.B. das Einscannen von Fotos oder dergleichen naturgetreuer Abbildungen unterschiedlicher Fertigartikel, die sich entsprechend dem gerade laufenden Fertigungsprogramm einblenden lassen, ist es nicht mehr erforderlich, eine gegebenenfalls große Anzahl von einmal mit Wanddickenpunkten versehenen Fertigartikeln separat in einem Lager zu dokumentieren bzw. aufzubewahren, um diese dann in bisher üblicher Weise körperlich zum Ziele des Erhalts von Vergleichswerten beizustellen.

Im einfachsten Fall wird zur Steuerung des veränderlichen Düsenspalts die Austrittszeit des Vorformlings aus dem Blaskopf vorgegeben. Zur Vermeidung von Schwankungen im Formteilgewicht werden hierbei der Hub des Dorns zur Wanddickensteuerung, ein von der Länge des Schlauchs und vom gerade eingesetzten Material (der Vorformlingsschlauch kann mehr oder weniger durchhängen) abhängiger Linearanteil, ein von dem variierenden Gewicht des Fertigartikels bestimmter Grundanteil und ein Profilanteil berücksichtigt.

Weiterhin wird vorgeschlagen, daß die Profile von Wanddickensteuerungskurven unterschiedlicher Fertigartikel und/oder geänderte Profilkurven gespeichert werden. Dem Bediener bzw. Einrichter steht somit ein optimiertes Archivierungssystem zur Verfügung, das er bei einem Programmwechsel beliebig aufblättern und den jeweils dazugehörenden Fertigartikel auf dem Bildschirm darstellen kann.

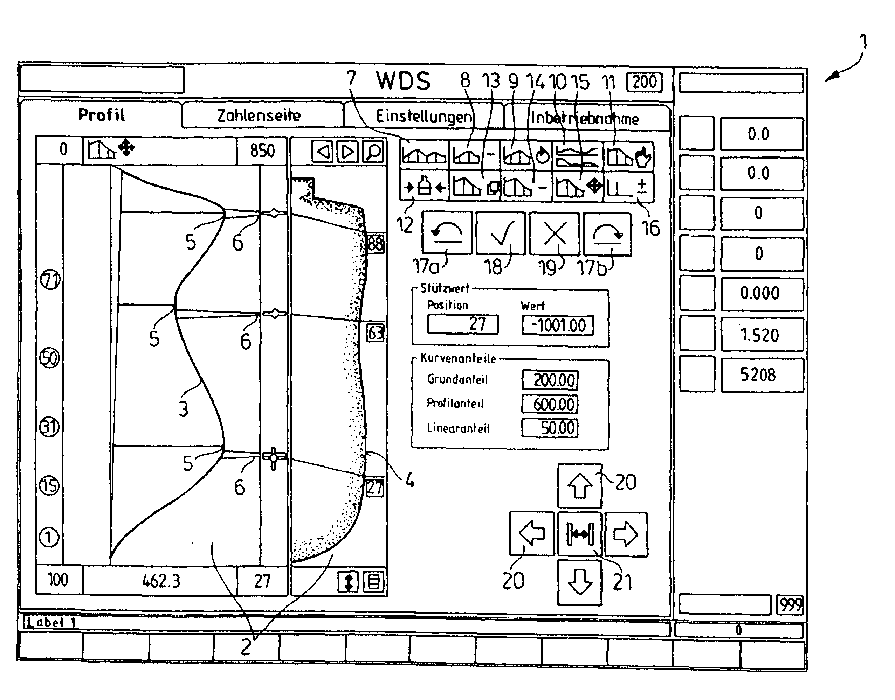

Weitere Einzelheiten und Vorteile der Erfindung ergeben sich aus den Ansprüchen und der nachfolgenden Beschreibung eines in der einzigen Zeichnung als Einzelheit eines Mikrorechners dargestellten Anzeige- und Bedienfeldes. Auf die Darstellung einer als solche herkömmlichen und hinlänglich bekannten (vgl. den eingangs geschilderten Stand der Technik) Kunststoff-Blasformmaschine ist hier deshalb verzichtet worden.

Von einem nicht gezeigten Rechner ist in der Zeichnungsfigur das Anzeige- und Bedienfeld 1 dargestellt. Der Rechner führt neben anderen Steuer- und Regelaufgaben auch die axiale und radiale Wanddickensteuerung (PWDS) durch, wozu mittels einer Vertikalverstellung eines Dorns eines Blaskopfes der Kunststoff-Blasformmaschine der Düsenspalt entsprechend der gewünschten Dickenverteilung eingestellt wird. Einem Bediener bzw. Einrichter der Blasformmaschine wird die Optimierung der Wanddickensteuerung dadurch in einfacher Weise ermöglicht, daß auf dem Bildschirm der Rechnereinheit neben dem Profil einer Wanddickensteuerungskurve 3 ein z.B. als Foto abgescannter Fertigartikel 4 dargestellt wird. An dem aus dem Blaskopf extrudierten Vorformling vorhandene kritische Stellen 5 werden durch Markierungen 6 gekennzeichnet und dem Fertigartikel 4 grafisch zugeordnet, wie im Ausführungsbeispiel durch die mit 27, 63 und 88 bezifferten Stützwertpositionen gezeigt.

Bei Abweichungen von dem dokumentierten, die exakten Sollwertvorgaben liefernden Fertigartikel 4 kann der Einrichter sofort eingreifen und notwendige Änderungen bis zur Optimierung des Kurvenprofils bzw. der Wanddickensteuerungskurve 3 vornehmen, die dann von der Steuerung des Rechners übernommen werden. Die für unterschiedliche Fertigartikel optimierten, verschiedenen Wandsteuerungskurven können gespeichert und archiviert werden, so daß sie in der Folge bei einem herzustellenden gleichen Artikel jederzeit abgerufen werden können.

Das Anzeige und Bedienfeld 1 weist mehrere Modus-Symbole auf, und zwar einen Qualitätsüberwachungsmodus 7, einen Profil-Lösch-Modus 8, einen Profil-Rotier-Modus 9, einen Profil-Sychronisier-Modus 10, einen Auswahl-Modus 11, einen Schlauchmarkierungs-Modus 12, einen Segment-Kopier-Modus 13, einen Segment-Lösch-Modus 14, einen Kurvenbereich-Bearbeitungsmodus 15, einen Stützpunkte-Zufüge- bzw. Lösch-Modus 16, einen Schritt-Tastenmodus 17a, 17b, einen Profil-Übernahmemodus 18 und einen Profil-Änderungs-Modus 19. Weiterhin sind Cursor-Richtungstasten 20 und eine Markierungstaste 21 vorhanden.

Dem Bediener ist es mit dem Qualitätsüberwachungs-Modus 7 möglich, die aktuelle Istwertkurve als Masterkurve zu übernehmen. Um diese kann ein Toleranzband mit einstellbarer Breite gelegt werden. Sofern die nachfolgend aufgezeichneten Istwerte das Toleranzband über- oder unterschreiten, erfolgt eine Meldung. Bei Betätigung der Löschtaste 8 wird das gesamte Profil gelöscht, während es der Modus 9 erlaubt, das gesamte Profil zu rotieren, so daß beispielsweise Stützwerte, die an einem Profilende herausgeschoben werden, am gegenüberliegenden Ende wieder eingefügt werden. Mit dem Sychronisiermodus 10 können zuvor ausgewählte Profile gleichzeitig verschoben werden. Aufgrund des Auswahlmodus 12 läßt sich ein Kurvenbereich selektieren und bearbeiten.

Das Setzen von Schlauchmarkierungen an definierten Profilpositionen wird mit dem Modus 12 durchgeführt. Die Markierungen können lokalisiert und anschließend dem neben dem Profil befindlichen Artikel grafisch zugeordnet werden. Der Kopiermodus 13 erlaubt es, ein im Auswahlmodus markiertes Kurvensegment zu duplizieren und an eine andere Stelle der Kurve zu verschieben, und mit dem Modus 14 ist es möglich, ein im Auswahlmodus markiertes Kurvensegment zu löschen. Der Bearbeitungsmodus 15 erlaubt es, einen im Auswahlmodus markierten Kurvenbereich zu verschieben, zu dehnen oder zu stauchen. Mit dem Modus 16 lassen sich Stützpunkte bzw. -werte hinzufügen oder löschen.

Die Wanddickenapplikation verfügt über einen Undo-Speicher. Ein aktives Profil kann daher vor einer Änderung gespeichert werden. Mit den Tasten 17a "Schritt zurück" bzw. 17b "Schritt vorwärts" kann in diesem Speicher geblättert werden, so daß abgelegte alte Profile erneut aktiviert werden können. Mit dem Modus 18 können Änderungen des Profils in die Steuerung übernommen und mit dem Modus 19 alle an dem Profil durchgeführten Änderungen verworfen werden, sofern die Kurve noch nicht in die Steuerung übernommen wurde.

Die Cursor-Tasten 20 dienen zum Verschieben des Cursors oder von Kurvenbereichen in die durch Pfeile angegebenen Richtungen. Alternativ ist es möglich, diese Aktionen durch Bewegen des Stiftes im Profil durchzuführen. Zur Markierung eines nicht markierten Stützpunktes wird die Taste 21 betätigt. Weiterhin sind Eingriffsmöglichkeiten gegeben, um in einem Modus Qualitätsüberwachung die aktuelle Kurve als Masterkurve zu übernehmen, abhängig vom Modus das gesamte Profil oder das ausgewählte Segment zu löschen und die Markierung aller ausgewählten Stützwerte zurückzunehmen.

## Patentansprüche

1. Verfahren zum Herstellen von Kunststoff-Blasformartikeln auf einer Blasformmaschine, die zur Erzeugung mindestens eines Vorformlings mit über seine Länge veränderlicher Wanddicke einen Blaskopf mit von einer Rechnereinheit nach Vergleichswerten prozeßgesteuerter Düsenspalteinstellung aufweist,
**dadurch gekennzeichnet,**
**daß** ein Fertigartikel (4) auf dem Bildschirm (2) der Rechnereinheit neben dem Profil der Wanddickensteuerungskurve (3) dargestellt wird sowie kritische Stellen (5) des Kurvenprofils (3) markiert und dem Fertigartikel (4) grafisch zugeordnet werden.

2. Verfahren nach Anspruch 1,
**dadurch gekennzeichnet,**
**daß** Abweichungen des aktuell produzierten vom dokumentierten Fertigartikel (4) festgestellt werden und die Änderungen des Kurvenprofils (3) in die Steuerung übernommen werden.

3. Verfahren nach Anspruch 1 oder 2,
**dadurch gekennzeichnet,**
**daß** unterschiedliche Profile von Wanddickensteuerungskurven (3) zugeordnet zu den Fertigartikeln sowie geänderte Kurven gespeichert werden.

## Claims

1. A method for manufacturing plastic blow moulding articles on a blow-ramming moulding machine for the manufacture of at least one preform, and that is equipped with a die head having a die gap adjustment which is process-controlled by a computer processing unit on the basis of comparison values,
**characterised in that**
a finished article (4) is displayed on the monitor (2) of the computer processing unit beside the profile of the wall thickness control curve (3), and critical points (5) of the curve profile (3) are marked and graphically assigned to the finished article (4).

2. The method according to claim 1,
**characterised in that**
deviations of the article currently being produced from the documented finished article (4) are detected and the changes to the curve profile (3) are transferred to the control unit.

3. The method according to claim 1 or 2,
**characterised in that**
various profiles of wall thickness curves (3) are assigned to the finished articles and changed curves are stored.

## Revendications

1. Procédé de fabrication d'articles soufflés en matière plastique dans une machine de soufflage sur matrice qui présente, dans le but de fabriquer au moins une ébauche d'une épaisseur de paroi variable sur sa longueur, une tête de soufflage avec un réglage de fente de buse à processus contrôlé par une unité numérique en fonction de valeurs comparatives,
**caractérisé en ce que**
un article fini (4) est représenté à l'écran (2) de l'unité numérique près du profil de la courbe de contrôle de l'épaisseur de paroi (3) et que les points critiques (5) du profil de courbe (3) sont marqués et associés graphiquement à l'article fini (4).

2. Procédé selon la revendication 1,
**caractérisé en ce que**
les écarts entre l'article fini (4) actuellement produit et celui documenté sont détectés et que les modifications du profil de courbe (3) sont enregistrées dans la commande.

3. Procédé selon la revendication 1 ou 2,
**caractérisé en ce que**
les profils différents des courbes de contrôle de l'épaisseur de paroi (3) associés aux articles finis ainsi que les courbes modifiées sont sauvegardés.
